# EUROPEAN PATENT SPECIFICATION

(11) **EP 4 087 188 B1**
(45) Date of publication and mention of the grant of the patent: **01.10.2025**
(21) Application number: 20909638.7
(22) Date of filing: 31.12.2020
(51) Int. Cl.: H04L 12/18, H04W 76/10, H04W 4/06, H04W 4/08, H04L 65/1069, H04L 65/611, H04L 65/612, H04W 76/12, H04W 76/40

(54) **MULTICAST SERVICE IMPLEMENTING METHOD, DEVICE, AND COMMUNICATION DEVICE**
MULTICAST-DIENST-IMPLEMENTIERUNGSVERFAHREN, VORRICHTUNG UND KOMMUNIKATIONSVORRICHTUNG
PROCÉDÉ DE MISE EN OEUVRE DE SERVICE DE MULTIDIFFUSION, DISPOSITIF ET DISPOSITIF DE COMMUNICATION

(30) Priority: 02.01.2020 CN 202010002085
(43) Date of publication of application: 09.11.2022
(73) Proprietor: Vivo Mobile Communication Co., Ltd., Dongguan, Guangdong 523863 (CN)
(72) Inventor: XIE, Zhenhua, Dongguan, Guangdong 523863 (CN); WANG, Wen, Dongguan, Guangdong 523863 (CN)
(74) Representative: Conti, Marco
(86) International application number: PCT/CN2020/141890
(87) International publication number: WO 2021/136467

(56) References cited:
- EP-A1- 2 071 838
- WO-A1-2019/091456
- WO-A1-2019/157893
- CN-A- 101 030 918
- CN-A- 101 030 918
- CN-A- 101 047 976
- CN-A- 101 094 443
- CN-A- 101 094 443
- CN-A- 101 163 320
- CN-A- 110 557 724
- JUNIPER NETWORKS: "5MBS receiver join request and authorization by ASP", 3GPP DRAFT; S2-1910922, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, Nevada, USA; 20191118 - 20191122, 7 November 2019 (2019-11-07), Mobile Competence Centre ; 650, route des Lucioles ; F-06921 Sophia-Antipolis Cedex ; France, XP051816353

## Description

### TECHNICAL FIELD

The present invention relates to the field of communications technologies, and in particular, to a multicast service implementation method and a system.

### BACKGROUND

In the related art, multicast services are provided based on network elements. However, the core network of a 5G network is a service architecture based on network functions. Therefore, multicast services are unable to be provided on the 5G network architecture.
WO2019157893A1 discloses a session establishment method and device.

### SUMMARY

Embodiments of the present invention provide a multicast service implementation method and a system, as defined in the appended set of claims, such that multicast services are able to be provided on a 5G network architecture.

In the preceding solutions, when the terminal requests a multicast service, the first network function interacts with the second network function before executing a unicast session establishment procedure with the terminal to establish a unicast session connection to the terminal. In this way, multicast services are able to be provided based on service configurations of a 5G network architecture.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart 1 of a multicast service implementation method according to an embodiment of the present invention;
FIG. 2 is a flowchart 2 of a multicast service implementation method according to an illustrative embodiment of the present invention not in accordance with the appended claims;
FIG. 3 is a flowchart 3 of a multicast service implementation method according to an illustrative embodiment of the present invention not in accordance with the appended claims;
FIG. 4 is a flowchart 4 of a multicast service implementation method according to an embodiment of the present invention;
FIG. 5 is a schematic diagram of a multicast service architecture according to an embodiment of the present invention;
FIG. 6 is a flowchart 5 of a multicast service implementation method according to an embodiment of the present invention;
FIG. 7 is a flowchart 6 of a multicast service implementation method according to an illustrative embodiment of the present invention not in accordance with the appended claims;
FIG. 8 is a flowchart 7 of a multicast service implementation method according to an illustrative embodiment of the present invention not in accordance with the appended claims;
FIG. 9 is a schematic structural diagram of a first network function according to an illustrative embodiment of the present invention not in accordance with the appended claims;
FIG. 10 is a schematic structural diagram of a second network function according to an illustrative embodiment of the present invention not in accordance with the appended claims;
FIG. 11 is a schematic structural diagram of a third network function according to an illustrative embodiment of the present invention not in accordance with the appended claims;
FIG. 12 is a schematic structural diagram of a terminal according to an illustrative embodiment of the present invention not in accordance with the appended claims; and
FIG. 13 is a schematic structural diagram of a communications device according to an illustrative embodiment of the present invention not in accordance with the appended claims.

### DESCRIPTION OF EMBODIMENTS

The following describes exemplary embodiments of the present invention in more detail with reference to the accompanying drawings. Although the exemplary embodiments of the present invention are shown in the accompanying drawings, it should be understood that the present invention may be implemented in various forms and should not be limited by the embodiments set forth herein. On the contrary, the embodiments are provided to enable a more thorough understanding of the present invention and completely convey the scope of the present invention as defined by the appended claims to a person skilled in the art.

The terms "first", "second", and the like in this specification and claims of this application are used to distinguish between similar objects rather than describing a specific order or sequence. It should be understood that the figures used in this way are interchangeable in appropriate circumstances, so that the embodiments of this application described herein can be implemented in other orders than the order illustrated or described herein. In addition, the terms "include", "comprise", and any other variants thereof are intended to cover a non-exclusive inclusion. For example, a process, method, system, product, or device that includes a list of steps or units is not necessarily limited to those steps or units that are expressly listed, but may include other steps or units that are not expressly listed or are inherent to such process, method, product, or device. "And/or" in the specification and claims represents at least one of the connected objects.

Examples provided in the following description are not intended to limit the scope, applicability, or configuration described in the claims. Functions and arrangements of discussed elements may be changed without departing from the spirit and scope of this disclosure. Various examples may be omitted or replaced properly, or various procedures or components may be added. For example, the described method may be performed in an order different from the described order, and steps may be added, omitted, or combined. In addition, features described with reference to some examples may be combined in other examples.

Optionally, the communications device in the embodiments of the present invention may be a terminal or network device. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of the present invention.

The network device may be a base station or a core network element. The base station may be a 5G base station and a base station of a later release (for example, gNB or 5G NR NB), or a base station in other communications systems (for example, eNB, WLAN access point, or other access points). The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, or another appropriate term in the art. As long as a same technical effect is achieved, the base station is not limited to a specific technical term.

The core network element is optionally an access and mobility management function (Access and Mobility Management Function, AMF), where the AMF may also be referred to as an access management function; or the core network element is optionally a session management function (Session Management Function, SMF).

The 3rd Generation Partnership Project (3rd Generation Partnership Project, 3GPP) has defined a multicast service user-add procedure for mobile networks. However, this procedure is applicable only to 2G, 3G, and 4G networks. The core network of a 5G network employs a service based architecture (Service Based Architecture) such that the core network provides services no longer based on network elements with complete software and hardware, but based on network functions in the form of software. Existing multicast network elements are unable to adapt to the new architecture through simple changes. As a result, existing multicast services cannot be provided on 5G networks.

Embodiments of the present invention provide a multicast service implementation method and apparatus and a communications device such that multicast services are able to be provided on a 5G network architecture.

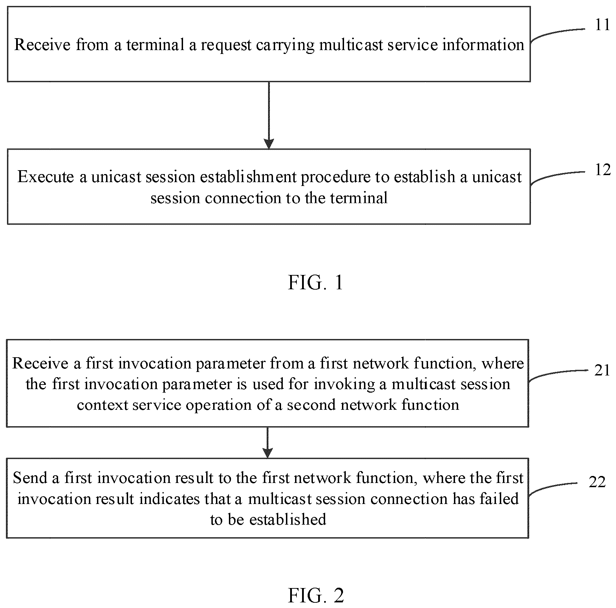

An embodiment of the present invention provides a multicast service implementation method applied to a first network function of a communications device, which, as shown in FIG. 1, includes:
Step 11: Receive from a terminal a request carrying multicast service information; and
Step 12: Execute a unicast session establishment procedure to establish a unicast session connection to the terminal.

In this embodiment, after receiving the request carrying multicast service information from the terminal, the first network function executes the unicast session establishment procedure to establish a unicast session connection to the terminal such that multicast services are able to be provided on a 5G network architecture.

In an exemplary embodiment of the present invention, the method further includes:
sending a first invocation parameter to a second network function, where the first invocation parameter is used for invoking a multicast session context service operation of the second network function; and
receiving a first invocation result from the second network function, where the first invocation result indicates that a multicast session connection has failed to be established.

In an exemplary embodiment of the present invention, the request includes any one of the following:
a multicast session establishment request;
a first data packet for requesting to join a multicast group; and
a unicast session establishment request.

In an exemplary embodiment of the present invention, the first invocation parameter includes a user identifier of the terminal and the multicast service information.

In an exemplary embodiment of the present invention, the multicast service information includes at least one of the following: a multicast address, a multicast group identifier, and first indication information for indicating a multicast session.

In an exemplary embodiment of the present invention, the request may be sent to the first network function through a signaling path; or
the request may be sent to the first network function through a user-plane path.

In an exemplary embodiment of the present invention, the first invocation result may further include at least one of the following:
second indication information indicating whether a user is in a multicast service group; and
a failure cause.

In an exemplary embodiment of the present invention, the method further includes:
sending the failure cause and/or the second indication information to the terminal. After the failure cause is sent to the terminal, the terminal is able to know the failure cause.

In the claimed invention, the first network function is an AMF or SMF.

In the embodiments of the present invention, terminal and terminal user are different concepts. A terminal user may be understood as an owner or user of a terminal.

An embodiment of the present invention provides a multicast service implementation method, applied to a second network function of a communications device, as shown in FIG. 2, which is not in accordance with the appended claims and given as an example useful for the understanding of the invention, and including:
Step 21: Receive a first invocation parameter from a first network function, where the first invocation parameter is used for invoking a multicast session context service operation of the second network function; and
Step 22: Send a first invocation result to the first network function, where the first invocation result indicates that a multicast session connection has failed to be established.

In an exemplary embodiment of the present invention, the method may further include:
sending a second invocation parameter to a third network function, where the second invocation parameter is used for invoking an authorization service operation of the third network function; and
receiving a second invocation result from the third network function, where the second invocation result indicates that an error has occurred.

In an exemplary embodiment of the present invention, the second invocation parameter may further include a user identifier of a terminal and multicast service information. The multicast service information includes at least one of the following: a multicast address, a multicast group identifier, and first indication information for indicating a multicast session.

In an exemplary embodiment of the present invention, the second invocation result may include at least one of the following:
third indication information indicating that a user is in a multicast service group or that a user is not in a multicast service group;
a multicast service group identifier; and
a failure cause.

The second network function may send the failure cause to the first network function so that the first network function knows the failure cause.

In the claimed invention, the second network function is a multicast broadcast session function (Multicast Broadcast Session Function, MBSF), or an AMF and MBSF, or an SMF and MBSF.

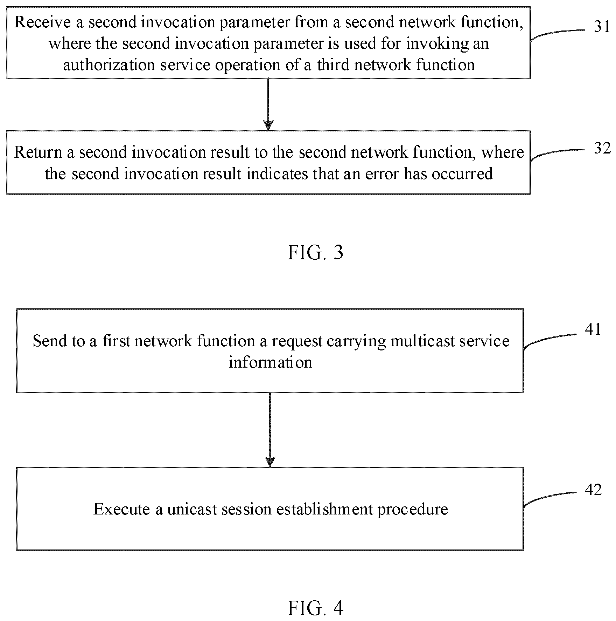

An embodiment of the present invention provides a multicast service implementation method, applied to a third network function of a communications device, as shown in FIG. 3, which is not in accordance with the appended claims and given as an example useful for the understanding of the invention, and including:
Step 31: Receive a second invocation parameter from a second network function, where the second invocation parameter is used for invoking an authorization service operation of the third network function; and
Step 32: Return a second invocation result to the second network function, where the second invocation result indicates that an error has occurred.

In an exemplary embodiment of the present invention, the returning a second invocation result to the second network function includes at least one of the following:
returning the second invocation result to the second network function based on a user identifier of a terminal and multicast service information that are in the second invocation parameter; or
receiving event operation information from a fourth network function, sending a decision request to the fourth network function, and receiving a third result from the fourth network function, where the third result indicates that an error has occurred.

In the claimed invention, the third network function is a multicast broadcast policy control function (Multicast Broadcast Policy Control Function, MBPCF).

An embodiment of the present invention provides a multicast service implementation method applied to a terminal, which, as shown in FIG. 4, includes:
Step 41: Send to a first network function a request carrying multicast service information; and
Step 42: Execute a unicast session establishment procedure.

In an exemplary embodiment of the present invention, the request includes any one of the following:
a multicast session establishment request;
a first data packet for requesting to join a multicast group; and
a unicast session establishment request.

In an exemplary embodiment of the present invention, the executing a unicast session establishment procedure includes any one of the following:
receiving a notification for establishing a unicast session connection;
initiating establishment of a unicast session connection; and
completing a unicast session establishment procedure.

In an exemplary embodiment of the present invention, the request may be sent to the first network function through a signaling path; or
the request may be sent to the first network function through a user-plane path.

In an exemplary embodiment of the present invention, the method further includes receiving at least one of the following information from the first network function:
second indication information indicating whether a user is in a multicast service group; and
a failure cause.

After receiving the failure cause, the terminal is able to know the failure cause.

In the embodiments of the present invention, terminal and terminal user are different concepts. A terminal user may be understood as an owner or user of a terminal.

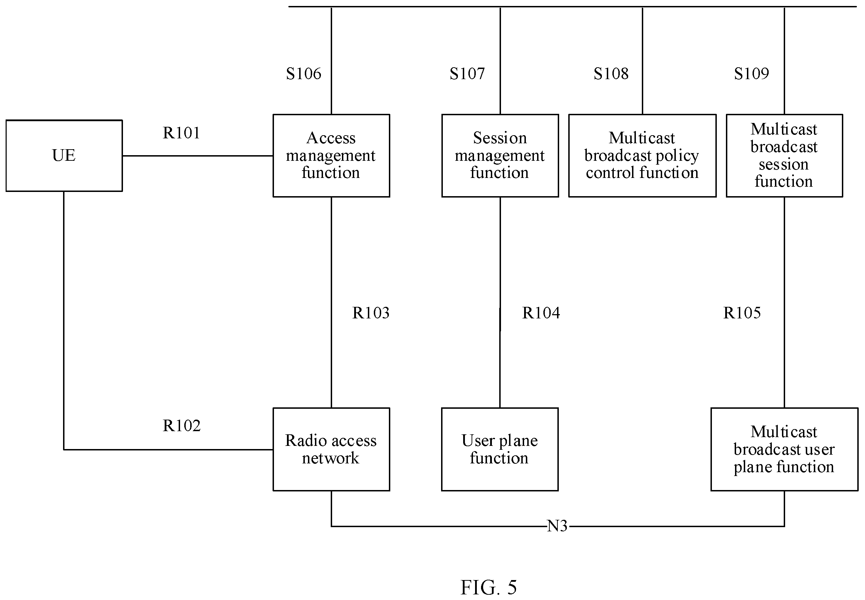

FIG. 5 is a schematic diagram of a multicast service architecture according to an embodiment of the present invention. As shown in FIG. 5, interface R101 is used for signaling exchange between a terminal (User Equipment, UE) and an access management function (Access Management Function, AMF). Interface R102 is used for signaling and data exchange between the terminal and a radio access network (Radio Access Network, RAN) which is also known as a base station system. Interface R103 is used for signaling exchange between the radio access network and the AMF. Interface R104 is used for control signaling exchange between a user plane function (User Plane Function, UPF) and a session management function (Session Management Function, SMF). Interface R105 is used for control signaling exchange between multicast broadcast user plane functions (Multicast Broadcast User plane Function, MBUF). Service-based invocation S106 provides various access management related services that are made open by the AMF for invocation by other network functions (Network Function, NF). Service-based invocation S107 provides various session management related services that are made open by the SMF for invocation by other NFs. Service-based invocation S108 provides various multicast broadcast policy control related services that are made open by a multicast broadcast policy control function (Multicast Broadcast Policy Control Function, MBPCF) for invocation by other NFs. Service-based invocation S109 provides various multicast broadcast session management related services that are made open by a multicast broadcast session function (Multicast Broadcast Session Function, MBSF) for invocation by other NFs.

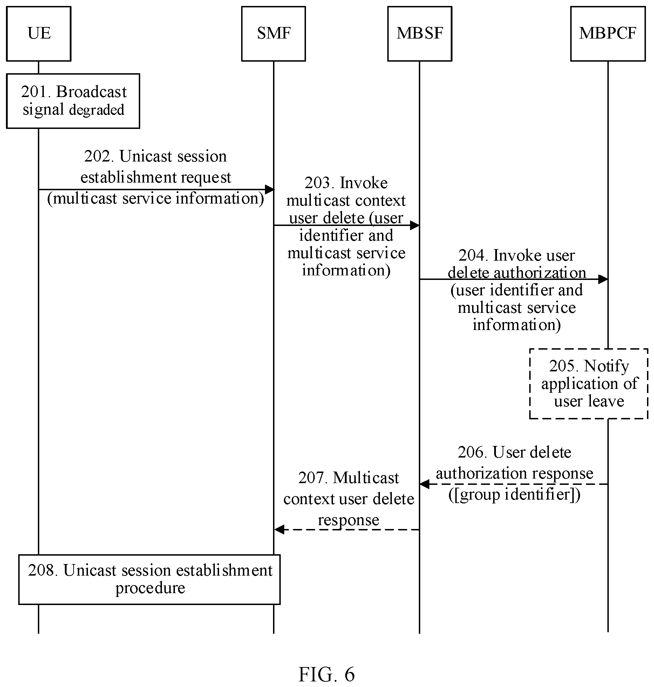

In a specific embodiment of the present invention, the first network function may change a multicast service into a unicast mode according to a user request of a terminal. As shown in FIG. 6, this embodiment includes the following steps:
Step 201: The terminal finds that a broadcast signal has been degraded but still wants to receive relevant data content.
Step 202: The terminal sends a unicast session establishment request, for example, a PDU Session Establishment Request message, to an SMF. The request carries multicast service information such as a multicast address (Multicast IP), a multicast group identifier (Temporary Mobile Group Identifier, TMGI), or indication information for indicating establishment of a multicast session.
Step 203: The SMF invokes a multicast context user delete service operation of an MBSF serving a multicast service indicated by the multicast service information, for example, an Nmbsf_MBContext_UserDelete operation, where parameters include a user identifier (for example, an international mobile subscriber identity (International Mobile Subscriber Identity, IMSI)) and the multicast service information.
Step 204: The MBSF invokes a user delete authorization service operation of the MBPCF, for example, an Nmbpcf_PolicyAuthorization_UserDelete operation, where parameters include the user identifier and the multicast service information.
Step 205: Optionally, the MBPCF notifies an application corresponding to the multicast service that a user is leaving a multicast group. The notification message includes a second user identifier (for example, an IMSI or a general public subscriber identifier (General Public Subscriber Identifier, GPSI) found based on the IMSI).
Step 206: The MBPCF determines that the user is in a corresponding multicast group and deletes the user from the corresponding group; or the MBPCF receives a result returned by the app, which indicates that the user is in the multicast service group. Optionally, the MBPCF returns to the MBSF a result which may carry a group identifier, for example, a temporary mobile group identity (Temporary Mobile Group Identity, TMGI), and may also carry indication information indicating that the user is in or not in the group.
Step 207: Optionally, the MBSF returns to the SMF an invocation result which may contain the indication information indicating that the user is in or not in the group.
Step 208: After step 202, the SMF executes a unicast session establishment procedure, that is, a PDU Session Establishment procedure, or after step 207, the SMF executes a unicast session establishment procedure, that is, a PDU Session Establishment procedure, with the indication information in step 207 carried in a unicast session establishment completion message (for example, PDU Session Establishment Accept) sent to the terminal.

In this embodiment, the first network function is the SMF and the second network function is the MBSF. Alternatively, the second network function may integrate the SMF and MBSF, in which case, step 203 and step 207 are internal operations.

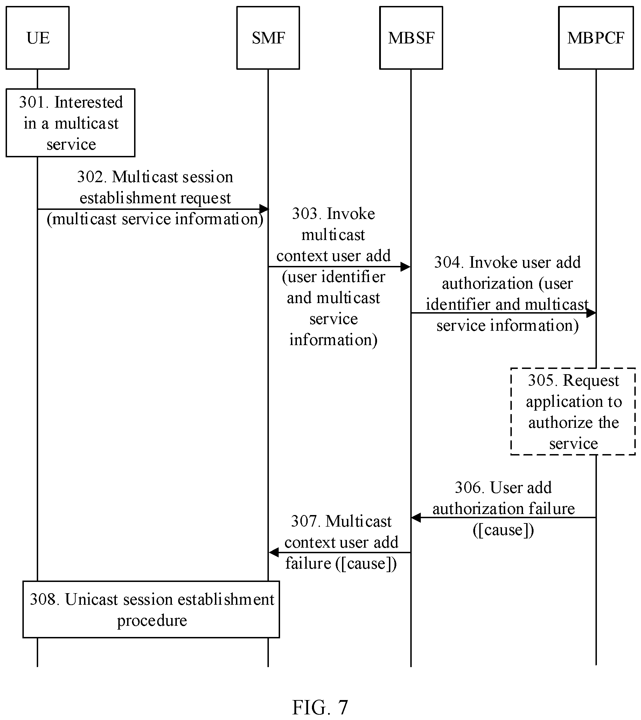

In another specific embodiment of the present invention, the first network function changes a multicast service into a unicast mode according to a user request of a terminal. As shown in FIG. 7, this embodiment, which is not in accordance with the appended claims and given as an example useful for the understanding of the invention, includes the following steps:
Step 301: The terminal is interested in a multicast service. For example, the terminal interacts with an application server of a content provider through an app or learns about the service from radio broadcast information.
Step 302: The terminal sends to an SMF a multicast session establishment request, for example, an MB Session Establishment Request message, which carries multicast service information such as a multicast address (Multicast IP), a multicast group identifier (Temporary Mobile Group Identifier, TMGI), or indication information for indicating establishment of a multicast session, and also carries information required for establishing a unicast session.

Alternatively, a unicast session establishment request (for example, a PDU Session Establishment Request message) that carries multicast service information may be used to express a multicast session establishment request.

Step 303: The SMF invokes a multicast context user add service operation of the MBSF, for example, an Nmbsf_MBContext_UserAdd operation, where parameters include a user identifier (for example, an IMSI) and multicast service information.

Step 304: The MBSF invokes a user add authorization service operation of the MBPCF, for example, an Nmbpcf_PolicyAuthorization_UserAdd operation, where parameters include the user identifier and the multicast service information.

Step 305: Optionally, the MBPCF notifies an application corresponding to the multicast service that a user is joining a multicast group, with a notification message including a second user identifier (for example, an IMSI or a GPSI found based on the IMSI).

Step 306: The MBPCF determines that the user is allowed to receive data of the corresponding multicast group but only unicast mode is allowed because of a small number of users present in the group; or, the MBPCF receives a result returned by the application, which indicates that only unicast mode is allowed. The MBPCF returns to the MBSF a result indicating that a unicast session is allowed. The result may carry a group identifier, for example, a TMGI, and may also carry cause information, for example, presence of a small number of users.

Step 307: The MBSF returns to the SMF an invocation result indicating that a unicast session is allowed. The invocation result may contain the cause information.

Step 308: The SMF executes a unicast session establishment procedure, that is, a PDU Session Establishment procedure, with the cause information in step 307 carried in a unicast session establishment completion message (for example, PDU Session Establishment Accept) sent to the terminal.

In this embodiment, the first network function is the SMF and the second network function is the MBSF. Alternatively, the second network function may integrate the SMF and MBSF, in which case, step 303 and step 307 are internal operations.

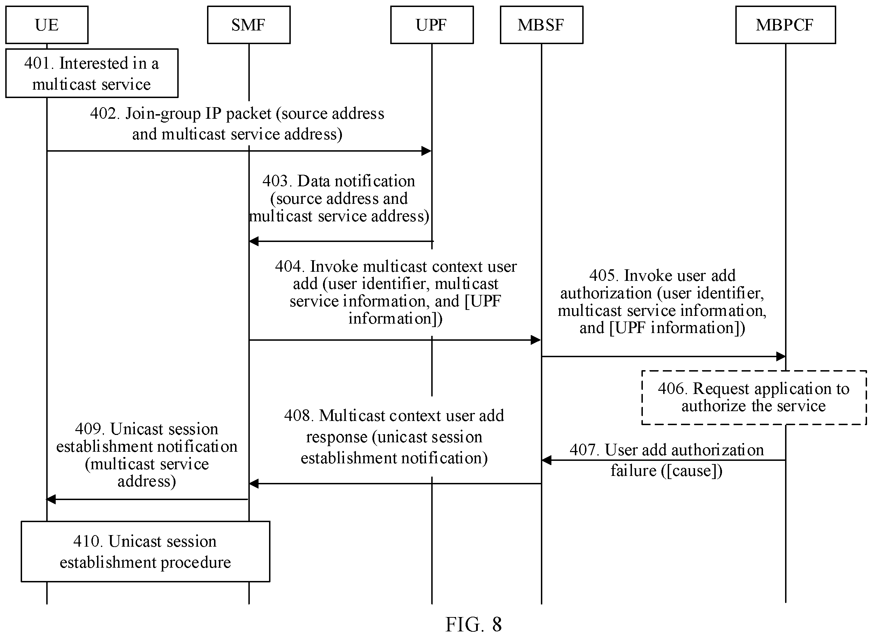

In another specific embodiment of the present invention, the first network function changes a multicast service into a unicast mode according to a user request of a terminal. As shown in FIG. 8, this embodiment, which is not in accordance with the appended claims and given as an example useful for the understanding of the invention, includes the following steps:
Step 401: The terminal is interested in a multicast service. For example, the terminal interacts with an application server of a content provider through an application (APP) or learns about the service from radio broadcast information.
Step 402: The terminal sends an IP packet through a user plane, using a join-group message defined in the multicast protocol, for example, an Internet Group Management Protocol (Internet Group Management Protocol, IGMP) join message or a multicast listener discover (Multicast Listener Discover, MLD) message. A source address of the IP packet is an IP address of the terminal, and a destination address thereof is a multicast group address, that is, a multicast IP address.
Step 403: The UPF notifies the SMF of data arrival and forwards the captured IP packet.
Step 404: The SMF invokes a multicast context user add service operation of the MBSF, for example, an Nmbsf_MBContext_UserAdd operation, where parameters include a user identifier (for example, an IMSI) and multicast service information.
Step 405: The MBSF invokes a user add authorization service operation of the MBPCF, for example, an Nmbpcf_PolicyAuthorization_UserAdd operation, where parameters include the user identifier and the multicast service information.
Step 406: Optionally, the MBPCF notifies an application corresponding to the multicast service that a user is joining a multicast group. The notification message includes a second user identifier (for example, an IMSI or a GPSI found based on the IMSI).
Step 407: The MBPCF determines that the user is allowed to receive data of the corresponding multicast group but only unicast mode is allowed because of a small number of users present in the group; or, the MBPCF receives a result returned by the application, which indicates that only unicast mode is allowed. The MBPCF returns to the MBSF a result indicating that a unicast session is allowed. The result may carry a group identifier, for example, a TMGI, and may also carry cause information, for example, presence of a small number of users.
Step 408: The MBSF returns to the SMF an invocation result indicating that a unicast session is allowed. The invocation result may contain cause information, or simply contain a message sent to the terminal for notifying establishment of a unicast connection, for example, Initiate PDU Session Establishment Notification, with cause information carried therein.
Step 409: The SMF sends a message for notifying the terminal of establishment of a unicast connection, for example, Initiate PDU Session Establishment Notification, or the SMF may forward the message received from the MBSF for notifying the terminal of establishment of a unicast connection.
Step 410: The terminal executes a unicast session establishment procedure, that is, a PDU Session Establishment procedure, with the cause information in step 408 carried in a unicast session establishment completion message (for example, PDU Session Establishment Accept) sent to the terminal.

In this embodiment, the first network function is the SMF and the second network function is the MBSF. Alternatively, the second network function may integrate the SMF and MBSF, in which case, step 404 and step 408 are internal operations.

The foregoing embodiments have described the multicast service implementation methods of the present invention. The following is to describe communications devices corresponding to the multicast service implementation methods of the present invention with reference to embodiments and the accompanying drawings.

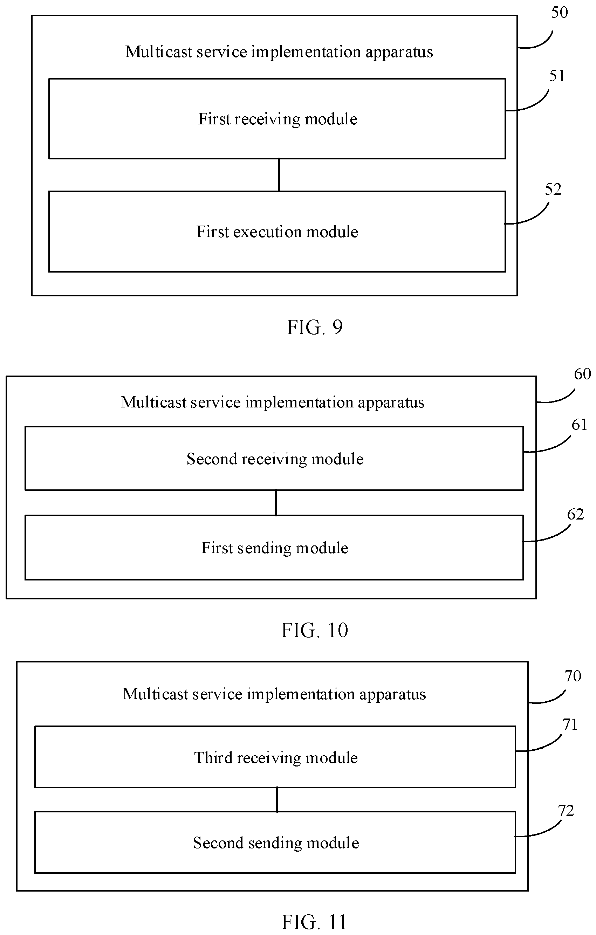

Referring to FIG. 9, FIG. 9 is a schematic structural diagram of a multicast service implementation apparatus according to an embodiment of the present invention not in accordance with the appended claims and given as an example useful for the understanding of the invention,. The multicast service implementation apparatus is applied to a first network function of a communications device. As shown in FIG. 9, the multicast service implementation apparatus 50 includes:
a first receiving module 51, configured to receive from a terminal a request carrying multicast service information; and
a first execution module 52, configured to execute a unicast session establishment procedure to establish a unicast session connection to the terminal.

In this embodiment, the multicast service implementation apparatus 50 is capable of implementing the processes implemented in the method embodiment shown in FIG. 1 of the present invention, with the same beneficial effects achieved. To avoid repetition, details are not described herein again.

Referring to FIG. 10, FIG. 10 is a schematic structural diagram of a multicast service implementation apparatus according to an embodiment of the present invention not in accordance with the appended claims and given as an example useful for the understanding of the invention. The multicast service implementation apparatus is applied to a second network function of a communications device. As shown in FIG. 10, the multicast service implementation apparatus 60 includes:
a second receiving module 61, configured to receive a first invocation parameter from a first network function, where the first invocation parameter is used for invoking a multicast session context service operation of the second network function; and
a first sending module 62, configured to send a first invocation result to the first network function, where the first invocation result indicates that a multicast session connection has failed to be established.

In this embodiment, the multicast service implementation apparatus 60 is capable of implementing the processes implemented in the method embodiment shown in FIG. 2 of the present invention, with the same beneficial effects achieved. To avoid repetition, details are not described herein again.

Referring to FIG. 11, FIG. 11 is a schematic structural diagram of a multicast service implementation apparatus according to an embodiment of the present invention not in accordance with the appended claims and given as an example useful for the understanding of the invention. The multicast service implementation apparatus is applied to a third network function of a communications device. As shown in FIG. 11, the multicast service implementation apparatus 70 includes:
a third receiving module 71, configured to receive a second invocation parameter from a second network function, where the second invocation parameter is used for invoking an authorization service operation of the third network function; and
a second sending module 72, configured to return a second invocation result to the second network function, where the second invocation result indicates that an error has occurred.

In this embodiment, the multicast service implementation apparatus 70 is capable of implementing the processes implemented in the method embodiment shown in FIG. 3 of the present invention, with the same beneficial effects achieved. To avoid repetition, details are not described herein again.

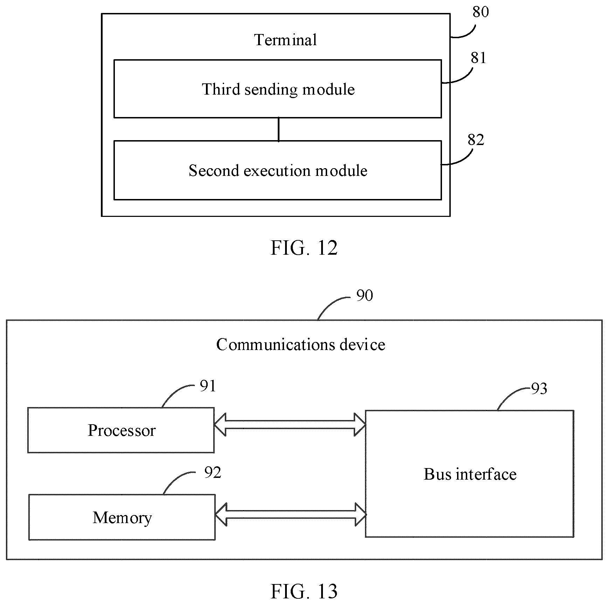

Referring to FIG. 12, FIG. 12 is a schematic structural diagram of a communications device according to an embodiment of the present invention not in accordance with the appended claims and given as an example useful for the understanding of the invention. The communications device is a terminal. As shown in FIG. 12, the terminal 80 includes:
a third sending module 81, configured to send to a first network function a request carrying multicast service information; and
a second execution module 82, configured to execute a unicast session establishment procedure.

In this embodiment, the terminal 80 is capable of implementing the processes implemented in the method embodiment shown in FIG. 4 of the present invention, with the same beneficial effects achieved. To avoid repetition, details are not described herein again.

Referring to FIG. 13, FIG. 13 is a schematic structural diagram of another communications device according to an embodiment of the present invention not in accordance with the appended claims and given as an example useful for the understanding of the invention. As shown in FIG. 13, the communications device 90 includes a processor 91, a memory 92, and a computer program stored in the memory 92 and capable of running on the processor. The components of the communications device 90 are coupled together via a bus interface 93. When the computer program is executed by the processor 91, the processes implemented in the method embodiment shown in FIG. 1 are implemented, or the processes implemented in the method embodiment shown in FIG. 2 are implemented, or the processes implemented in the method embodiment shown in FIG. 3 are implemented, or the processes implemented in the method embodiment shown in FIG. 4 are implemented, or the processes implemented in the method embodiment shown in FIG. 6 are implemented, or the processes implemented in the method embodiment shown in FIG. 7 are implemented, or the processes implemented in the method embodiment shown in FIG. 8 are implemented, with the same technical effects achieved. To avoid repetition, details are not described herein again.

An embodiment of the present invention further provides a computer-readable storage medium which stores a computer program. When the computer program is executed by a processor, the processes implemented in the method embodiment shown in FIG. 1 are implemented, or the processes implemented in the method embodiment shown in FIG. 2 are implemented, or the processes implemented in the method embodiment shown in FIG. 3 are implemented, or the processes implemented in the method embodiment shown in FIG. 4 are implemented, or the processes implemented in the method embodiment shown in FIG. 6 are implemented, or the processes implemented in the method embodiment shown in FIG. 7 are implemented, or the processes implemented in the method embodiment shown in FIG. 8 are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

A person of ordinary skill in the art may understand that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such implementations have gone beyond the scope of the present invention.

It may be clearly understood by a person skilled in the art that, for convenience and brevity of description, for detailed working processes of the system, apparatuses, and units described above, reference may be made to corresponding processes in the foregoing method embodiments, and details are not described herein again.

In the embodiments provided in this application, it should be understood that the disclosed apparatus and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be indirect couplings or communication connections via some interfaces, apparatuses or units, and may be implemented in electrical, mechanical, or other forms.

The units described as separate parts may or may not be physically separate, and parts displayed as units may or may not be physical units, meaning they may be located in one position or distributed on a plurality of network elements. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When implemented in a form of a software functional unit and sold or used as an independent product, the functions may be stored in a computer-readable medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the method described in the embodiments of the present invention. The foregoing storage medium includes any medium that can store program code, such as a USB flash drive, a removable hard disk, a ROM, a RAM, a magnetic disk, or an optical disc.

In addition, it should be noted that in the apparatus and method of the present invention, apparently, the components or steps may be decomposed and/or recombined. Such decomposition and/or recombination should be considered as equivalent solutions of the present invention. In addition, the steps for performing the foregoing series of processing may be performed in a natural chronological order as described herein, but do not necessarily need to be performed in a chronological order. Some steps may be performed in parallel or independent of each other. A person of ordinary skill in the art can understand that all or any steps or components of the method and the apparatus in the present invention may be implemented in any computing apparatus (including a processor, a storage medium, and the like) or a network of computing apparatuses through hardware, firmware, software, or a combination thereof. This can be implemented by a person of ordinary skill in the art who has read the descriptions of the present invention, by using their basic programming skills.

Therefore, the objective of the present invention may also be implemented by running a program or a set of programs on any computing apparatus. The computing apparatus may be a general apparatus of common sense. Therefore, the objective of the present invention may also be implemented by providing only a program product that includes program code for implementing the method or apparatus. Therefore, such program product also constitutes the present invention, and a storage medium storing such program product also constitutes the present invention. Apparently, the storage medium may be any storage medium of common sense or any storage medium that will be developed in the future. It should also be noted that in the apparatus and method of the present invention, apparently, the components or steps may be decomposed and/or recombined. Such decomposition and/or recombination should be considered as equivalent solutions of the present invention. In addition, steps for performing the foregoing series of processing may be performed in a natural chronological order as described herein, but are not necessarily performed in a chronological order. Some steps may be performed in parallel or independent of each other.

The foregoing descriptions are preferred embodiments of the present invention. It should be noted that persons of ordinary skill in the art may make a number of improvements or polishing as long as they fall within the scope of protection of the appended claims.

## Claims

1. A multicast service implementation method, **characterized by** comprising:
receiving (202), by a Session Management Function, SMF, a unicast session establishment request from a user equipment, UE, the request carrying multicast service information;
invoking (203), by the SMF, a multicast context user delete of a Multicast Broadcast Session Function, MBSF, serving a multicast service indicated by the multicast service information;
invoking (204), by the MBSF, a user delete authorization of a Multicast Broadcast Policy Control Function, MBPCF;
returning (206), by the MBPCF, a user delete authorization response to the MBSF;
sending (207), by the MBSF, the multicast context user delete response to the SMF;
establishing (208), by the SMF, the unicast session.

2. The multicast service implementation method according to claim 1, wherein the multicast service information comprises at least one of the following: a multicast address, a multicast group identifier, and first indication information for indicating a multicast session.

3. The multicast service implementation method according to claim 1, wherein
the unicast session establishment request is sent to the SMF through a signaling path; or
the unicast session establishment request is sent to the SMF through a user-plane path.

4. A system, **characterized by** comprising:
a Session Management Function, SMF, configured to receive a unicast session establishment request from a user equipment, UE, the request carrying multicast service information, and invoke a multicast context user delete of a Multicast Broadcast Session Function, MBSF, serving a multicast service indicated by the multicast service information;
the MBSF, configured to invoke a user delete authorization of a Multicast Broadcast Policy Control Function, MBPCF;
the MBPCF, configured to return a user delete authorization response to the MBSF;
wherein the MBSF is further configured to send the multicast context user delete response to the SMF; and
the SMF is further configured to establish the unicast session.

5. The system according to claim 4, wherein the multicast service information comprises at least one of the following: a multicast address, a multicast group identifier, and first indication information for indicating a multicast session.

6. The system according to claim 4, wherein
the unicast session establishment request is sent to the SMF through a signaling path; or
the unicast session establishment request is sent to the SMF through a user-plane path.

## Patentansprüche

1. Multicast-Dienst-Implementierungsverfahren, **dadurch gekennzeichnet, dass** es Folgendes umfasst:
Empfangen (202) einer Anforderung zum Aufbau einer Unicast-Sitzung von einem Benutzergerät, UE, durch eine Sitzungsverwaltungsfunktion, SMF, wobei die Anforderung Multicast-Dienst-Informationen mitführt;
Auslösen (203) einer Multicast-Kontext-Benutzerlöschung einer Multicast-Broadcast-Sitzungsfunktion, MBSF, dienend als von den Multicast-Dienst-Informationen angegebener Multicast-Dienst, durch die SMF;
Auslösen (204) einer Autorisierung zur Benutzerlöschung einer Multicast-Broadcast-Richtlinienkontrollfunktion, MBPCF, durch die MBSF;
Zurücksenden (206) einer Antwort auf die Autorisierung zur Benutzerlöschung durch die MBPCF an die MBSF;
Senden (207) der Antwort auf die Multicast-Kontext-Benutzerlöschung durch die MBSF an die SMF;
Aufbauen (208) der Unicast-Sitzung durch die SMF.

2. Multicast-Dienst-Implementierungsverfahren nach Anspruch 1, wobei die Multicast-Dienst-Informationen mindestens Folgendes umfassen: entweder eine Multicast-Adresse und/oder eine Multicast-Gruppen-Kennung und/oder erste Angabeinformationen zum Angeben einer Multicast-Sitzung.

3. Multicast-Dienst-Implementierungsverfahren nach Anspruch 1, wobei
die Anforderung zum Aufbau einer Unicast-Sitzung durch einen Signalisierungspfad an die SMF gesendet wird; oder die Anforderung zum Aufbau einer Unicast-Sitzung durch einen Benutzerebenenpfad an die SMF gesendet wird.

4. System, **dadurch gekennzeichnet, dass** es Folgendes umfasst:
eine Sitzungsmanagementfunktion, SMF, die ausgelegt ist, um eine Anforderung zum Aufbau einer Unicast-Sitzung von einem Benutzergerät, UE, zu empfangen, wobei die Anforderung Multicast-Dienst-Informationen mitführt, und eine Multicast-Kontext-Benutzerlöschung einer Multicast-Broadcast-Sitzungsfunktion, MBSF, dienend als von den Multicast-Dienst-Informationen angegebener Multicast-Dienst, auszulösen;
die MBSF, die ausgelegt ist, um eine Autorisierung zur Benutzerlöschung einer Multicast-Broadcast-Richtlinienkontrollfunktion, MBPCF, auszulösen;
die MBPCF, die ausgelegt ist, um eine Antwort auf die Autorisierung zur Benutzerlöschung an die MBSF zurückzusenden, wobei die MBSF ferner ausgelegt ist, um die Antwort auf die Multicast-Kontext-Benutzerlöschung an die SMF zu senden; und
die SMF ferner ausgelegt ist, um die Unicast-Sitzung aufzubauen.

5. System nach Anspruch 4, wobei die Multicast-Dienst-Informationen mindestens Folgendes umfassen: entweder eine Multicast-Adresse und/oder eine Multicast-Gruppen-Kennung und/oder erste Angabeinformationen zum Angeben einer Multicast-Sitzung.

6. System nach Anspruch 4, wobei
die Anforderung zum Aufbau einer Unicast-Sitzung durch einen Signalisierungspfad an die SMF gesendet wird; oder die Anforderung zum Aufbau einer Unicast-Sitzung durch einen Benutzerebenenpfad an die SMF gesendet wird.

## Revendications

1. Procédé de mise en œuvre de service de multidiffusion, **caractérisé par le fait qu'**il comprend :
recevoir (202), par une fonction de gestion de session, SMF, une demande d'établissement de session de monodiffusion provenant d'un équipement utilisateur, UE, la demande transportant des informations de service de multidiffusion ;
appeler (203), par la SMF, une suppression d'utilisateur de contexte de multidiffusion d'une fonction de session de multidiffusion / diffusion, MBSF, desservant un service de multidiffusion indiqué par les informations de service de multidiffusion ;
appeler (204), par la MBSF, une autorisation de suppression d'utilisateur d'une fonction de commande de politique de multidiffusion / diffusion, MBPCF ;
renvoyer (206), par la MBPCF, une réponse d'autorisation de suppression d'utilisateur à la MBSF ;
envoyer (207), par la MBSF, la réponse de suppression d'utilisateur de contexte de multidiffusion à la SMF ;
établir (208), par la SMF, la session de monodiffusion.

2. Procédé de mise en œuvre de service de multidiffusion selon la revendication 1, dans lequel les informations de service de multidiffusion comprennent au moins l'un des éléments suivants : une adresse de multidiffusion, un identifiant de groupe de multidiffusion et des premières informations d'indication pour indiquer une session de multidiffusion.

3. Procédé de mise en œuvre de service de multidiffusion selon la revendication 1, dans lequel
la demande d'établissement de session de monodiffusion est envoyée à la SMF par l'intermédiaire d'un chemin de signalisation ; ou
la demande d'établissement de session de monodiffusion est envoyée à la SMF par l'intermédiaire d'un chemin de plan utilisateur.

4. Système, **caractérisé par le fait qu'**il comprend :
une fonction de gestion de session, SMF, configurée pour recevoir une demande d'établissement de session de monodiffusion provenant d'un équipement utilisateur, UE, la demande transportant des informations de service de multidiffusion, et pour appeler une suppression d'utilisateur de contexte de multidiffusion d'une fonction de session de multidiffusion / diffusion, MBSF, desservant un service de multidiffusion indiqué par les informations de service de multidiffusion ;
la MBSF, configurée pour appeler une autorisation de suppression d'utilisateur d'une fonction de commande de politique de multidiffusion / diffusion, MBPCF ;
la MBPCF, configurée pour renvoyer une réponse d'autorisation de suppression d'utilisateur à la MBSF ;
dans lequel la MBSF est en outre configurée pour envoyer la réponse de suppression d'utilisateur de contexte de multidiffusion à la SMF ; et
la SMF est en outre configurée pour établir la session de monodiffusion.

5. Système selon la revendication 4, dans lequel les informations de service de multidiffusion comprennent au moins l'un des éléments suivants : une adresse de multidiffusion, un identifiant de groupe de multidiffusion et des premières informations d'indication pour indiquer une session de multidiffusion.

6. Système selon la revendication 4, dans lequel
la demande d'établissement de session de monodiffusion est envoyée à la SMF par l'intermédiaire d'un chemin de signalisation ; ou
la demande d'établissement de session de monodiffusion est envoyée à la SMF par l'intermédiaire d'un chemin de plan utilisateur.
